# FASCICULE DE BREVET EUROPEEN

(11) **EP 2 108 164 B1**
(45) Date de publication et mention de la délivrance du brevet: **26.08.2015**
(21) Numéro de dépôt: 08701253.0
(22) Date de dépôt: 04.01.2008
(51) Int. Cl.: G06F 21/77, G06F 21/55, G06F 21/75

(54) **LIMITATION D'ACCES A UNE RESSOURCE D'UN CIRCUIT ELECTRONIQUE**
EINSCHRÄNKUNG DES ZUGRIFFS AUF EINE ELEKTRONISCHE SCHALTUNG
LIMITATION OF ACCESS TO A RESOURCE OF AN ELECTRONIC CIRCUIT

(30) Priorité: 05.01.2007 FR 0752552
(43) Date de publication de la demande: 14.10.2009
(73) Titulaire: PROTON WORLD INTERNATIONAL N.V., 1930 Zaventem (BE)
(72) Inventeur: MODAVE, Jean-Louis, B-1340 Ottignies (BE); HUQUE, Thierry, B-1367 Ramillies (BE)
(74) Mandataire: Thibon, Laurent
(86) Numéro de dépôt international: PCT/EP2008/050073
(87) Numéro de publication internationale: WO 2008/084017

(56) Documents cités:
- EP-A- 1 659 515
- WO-A-01/54057
- WO-A-99/56253
- WO-A-03/083769
- WO-A1-2004/029873
- FR-A1- 2 493 564

## Description

### Domaine de l'invention

La présente invention concerne de façon générale les circuits électroniques et, plus particulièrement, la protection d'informations contenues dans un circuit électronique ou dont la diffusion est contrôlée par ce circuit. Une information désigne tout type de données censées ne pas être communiquées de façon non contrôlée qu'elles soient contenues dans le circuit (par exemple, des codes d'accès, des mots de passe, des adresses de stockage, des étapes particulières d'algorithmes, etc.) ou qu'elles soient externes au circuit mais que celui-ci en contrôle la mise à disposition (par exemple, des données chiffrées, des contenus média diffusés, etc.).

Un premier aspect concerne la protection de données contenues dans un circuit électronique contre des tentatives de fraude visant à découvrir ces données censées rester secrètes.

Un autre aspect concerne le contrôle, au moyen d'un circuit électronique, de la communication ou de l'utilisation d'informations contenues dans ce circuit ou dans un dispositif annexe.

La présente invention sera décrite par la suite en relation avec un exemple d'application à un circuit électronique d'une carte à puce mais elle s'applique plus généralement à tout circuit électronique contenant des informations à diffusion contrôlée ou conditionnant la diffusion d'informations à diffusion contrôlée, que ce circuit soit sur une carte à puce, isolé, ou monté sur une carte électronique d'un appareil plus complexe.

### Exposé de l'art antérieur

Selon le premier aspect, lorsque qu'un circuit électronique est susceptible de manipuler des informations qui sont censées rester secrètes, il peut être équipé de mécanismes logiciels et/ou matériels de détection et de protection contre différentes tentatives d'attaques visant à pirater ces informations. Les mécanismes de protection (contremesures) aux attaques se répartissent entre ceux qui brouillent la manipulation des informations sensibles (par exemple, par injection de nombres aléatoires) et ceux qui cherchent à détecter les tentatives d'attaques pour bloquer les informations ou le circuit. Tous ces mécanismes ont l'inconvénient qu'ils allongent le temps de traitement des informations par rapport à une absence de protection.

De plus, ils requièrent que le circuit soit alimenté pour fonctionner. D'une part cela engendre une consommation improductive. D'autre part, cela permet à un fraudeur de contourner certaines contremesures en coupant l'alimentation du circuit (par exemple, en arrachant la carte à puce du lecteur).

Selon un autre aspect qui concerne le contrôle, au moyen d'un circuit électronique, de la communication ou de l'utilisation d'informations, les modules de chiffrement/déchiffrement sont difficilement protégeables. Il en résulte une fragilité du système car un même module peut alors être utilisé par plusieurs récepteurs. Par exemple, il suffit qu'une carte à puce authentique constituant un module d'accès soit mise à disposition en ligne par son possesseur sur l'Internet pour que plusieurs utilisateurs demandent en même temps des déchiffrements à la volée par le biais de l'Internet. L'accroissement des débits Internet disponibles et l'utilisation de l'Internet pour la diffusion de contenus numériques ont accru la vulnérabilité de ces systèmes.

Il serait souhaitable de pouvoir contrôler l'accès aux ressources du circuit de déchiffrement afin d'empêcher de telles fraudes.

Plus généralement, il serait souhaitable de pouvoir contrôler l'accès à des ressources d'un circuit électroniques, que ce soit pour éviter des fraudes ou pour tout autre raison (par exemple, limiter le nombre et/ou la durée d'utilisation de ces ressources). Par ressource, on entend toute application logicielle ou matérielle du circuit (par exemple, un algorithme de chiffrement, un programme d'une application du circuit, etc.) ainsi que toute information stockée ou manipulée par ce circuit (par exemple, une clé de chiffrement, un code d'authentification, etc.).

La demande internationale WO 01/54057 A décrit un circuit de protection intégré, par exemple, micro-contrôleur pour cartes à puces, renfermant une unité fonctionnelle ayant une fonction de protection. Un dispositif de commande détermine combien de fois la fonction de protection agit dans le temps. Lorsqu'on dépasse une valeur seuil, toute mise en action ultérieure de la fonction de protection est bloquée. A cet effet, il est prévu avantageusement une horloge analogique comprenant une mémoire de charge et qui mesure le temps expiré, même lorsque la tension d'alimentation est interrompue. Un compteur d'utilisation est actualisé pour chaque appel de la fonction de protection. Le circuit de protection offre une protection élevée vis-à-vis des attaques statistiques ; il est, par ailleurs, d'une fabrication simple et est compatible avec les systèmes existants.

### Résumé de l'invention

La présente invention vise à pallier tout ou partie des inconvénients des mécanismes de protection d'informations contenues dans un circuit électronique ou qui sont contrôlées par un tel circuit.

La présente invention est définie par les revendications annexées.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 représente une carte à puce du type auquel s'applique à titre d'exemple la présente invention ;
la figure 2 représente un circuit électronique du type auquel s'applique à titre d'exemple la présente invention ;
la figure 3 illustre un système auquel s'applique à titre d'exemple la présente invention ;
la figure 4 représente, de façon schématique et sous forme de blocs, un mode de réalisation d'un circuit électronique ;
la figure 5 est un schéma fonctionnel simplifié d'un mode de mise en oeuvre du procédé de contrôle d'accès ;
la figure 6 représente, de façon schématique et sous forme de blocs, un mode de réalisation d'un compteur d'accès ;
la figure 7 est un schéma fonctionnel simplifié d'un autre mode de mise en oeuvre du procédé de contrôle d'accès ;
la figure 8 représente un mode de réalisation d'un circuit électronique de rétention de charges ;
la figure 9 est un graphe courant-tension illustrant le fonctionnement du circuit de la figure 8 ;
la figure 10 est un chronogramme illustrant le fonctionnement du circuit de la figure 8 ;
la figure 11 représente un autre mode de réalisation d'un circuit de rétention de charges dans un exemple d'environnement ;
la figure 12 est un graphe courant-tension illustrant le fonctionnement du circuit de la figure 11 ;
les figures 13A, 13B et 13C sont respectivement une vue de dessus, une vue en coupe selon une première direction et le schéma électrique équivalent d'un mode de réalisation d'un circuit électronique de rétention de charges à partir de cellules EEPROM ;
les figures 14A, 14B et 14C sont respectivement une vue de dessus, une vue en coupe selon une deuxième direction et le schéma électrique équivalent d'un premier élément du circuit des figures 13A à 13C ;
les figures 15A, 15B et 15C sont respectivement une vue de dessus, une vue en coupe selon la deuxième direction et le schéma électrique équivalent d'un deuxième élément du circuit des figures 13A à 13C ;
les figures 16A, 16B et 16C sont respectivement une vue de dessus, une vue en coupe selon la deuxième direction et le schéma électrique équivalent d'un troisième élément du circuit des figures 13A à 13C ; et
les figures 17A, 17B et 17C sont respectivement une vue de dessus, une vue en coupe selon la deuxième direction et le schéma électrique équivalent d'un quatrième élément du circuit des figures 13A à 13C.

De mêmes éléments ont été désignés par de mêmes références aux différentes figures.

### Description détaillée

Par souci de clarté, seuls les éléments et étapes qui sont utiles à la compréhension de l'invention ont été représentés aux figures et seront décrits par la suite. En particulier, les ressources utilisées par un circuit électronique selon l'invention n'ont pas été détaillées, l'invention étant compatible avec toute utilisation habituelle d'une ressource matérielle ou logicielle. Les mécanismes de communication de données entre le circuit électronique et son environnement n'ont pas non plus été détaillés, l'invention étant là encore compatible avec les mécanismes usuels.

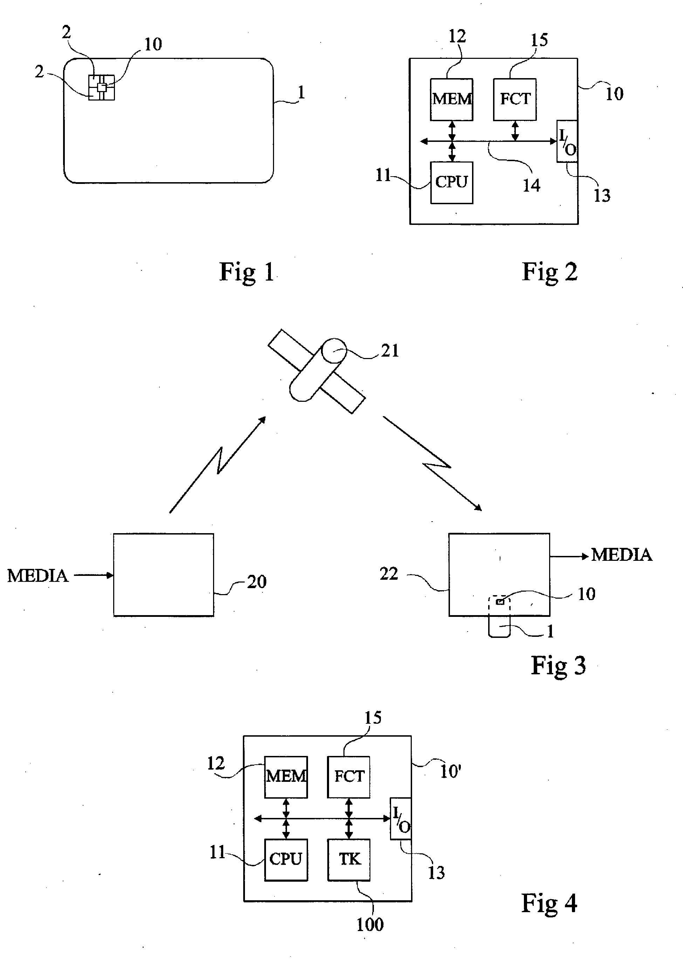

La figure 1 représente, de façon schématique, une carte 1 à puce du type auquel s'applique à titre d'exemple la présente invention. Une telle carte est constituée d'un support, généralement en matière plastique, sur ou dans lequel sont encartés un ou plusieurs circuits électroniques 10. Le circuit 10 est susceptible de communiquer avec un terminal au moyen de contacts 2 et/ou sans contact (transmission radioélectrique ou par modulation d'un champ électromagnétique d'un terminal).

La figure 2 représente, de façon très schématique et sous forme de blocs, un circuit électronique 10 (par exemple d'une carte à puce 1 de la figure 1) du type auquel s'applique à titre d'exemple la présente invention. Le circuit 10 comporte, entre autres, une unité de traitement numérique 11 (par exemple, une unité centrale de traitement - CPU), une ou plusieurs mémoires 12 (MEM) parmi lesquelles au moins une mémoire non volatile (par exemple de type EEPROM) et un circuit 13 d'entrée/sortie (I/O) pour communiquer avec l'extérieur du circuit (pour connexion aux contacts 2 ou à une antenne). Les différents éléments internes au circuit communiquent entre eux et avec l'interface 13 par un ou plusieurs bus 14 de données, d'adresses et de commande, ainsi que par d'éventuelles liaisons directes entre certains de ces éléments. Le circuit 10 peut également intégrer d'autres fonctions logicielles ou matérielles. Ces fonctions ont été symbolisées par un bloc 15 (FCT) en figure 2.

La figure 3 illustre, de façon très schématique et sous forme de blocs, un système de diffusion auquel s'applique, à titre d'exemple, un autre aspect.

Cet exemple concerne la diffusion par satellite de média numériques. Côté diffuseur 20, le contenu numérique MEDIA (le cas échéant en même temps ou après codage numérique d'un contenu analogique) est chiffré au moyen d'une clé préalablement à sa radiodiffusion, par exemple par l'intermédiaire d'un satellite 21. Côté réception, un décodeur 22 a pour rôle, non seulement de convertir les signaux pour les rendre interprétables (par exemple, en les convertissant en signaux vidéo), mais également de déchiffrer les données au moyen d'une clé contenue, par exemple, dans une carte à puce 1 dédiée à chaque utilisateur. Le décodeur 22 et le circuit 10 de déchiffrement (souvent appelé Module d'accès conditionnel ou CAM - Conditional Access Module) sont généralement distincts. De plus, pour des questions d'efficacité, le circuit 10 doit être capable de traiter rapidement un grand nombre de requêtes de déchiffrement.

Selon un premier aspect, dans le cas d'une attaque d'un circuit intégré pour en percer un secret, le fraudeur répète l'attaque un grand nombre de fois jusqu'à obtenir les informations qu'il souhaite. De plus, cette répétition s'effectue sur un intervalle de temps relativement court pour que l'attaque lui soit profitable. Par exemple, on peut considérer qu'une attaque par analyse de la consommation demande des dizaines de milliers de mesures, donc des milliers d'utilisations d'une même ressource pour être exploitable. Par contre, l'utilisation normale d'une clé dans la vie d'un produit n'excède généralement pas une centaine d'utilisations par jour.

Selon un autre aspect, dans le cas d'une utilisation d'un même module de déchiffrement par plusieurs utilisateurs en parallèle, on peut là aussi considérer que l'utilisation de la ressource (la clé de déchiffrement ou le programme de déchiffrement) un trop grand nombre de fois dénote d'une utilisation frauduleuse.

Une différence entre une utilisation normale d'une ressource et une utilisation susceptible d'être frauduleuse est la fréquence (moyenne) d'utilisation.

On pourrait donc envisager de compter le nombre d'utilisations d'une ressource d'un circuit électronique sur un temps donné pour détecter un comportement frauduleux.

Un problème qui subsiste est qu'un circuit électronique n'est pas nécessairement alimenté en permanence et, dans la plupart des cas, ne contient pas de batterie permettant de faire fonctionner un compteur temporel, de sorte qu'une telle mesure temporelle pose problème. De-plus, même s'il dispose d'une batterie, celle-ci est susceptible d'être déchargée (volontairement ou non).

La figure 4 représente, de façon très schématique et sous forme de blocs, par une vue à rapprocher de la figure 2, un mode de réalisation d'un circuit électronique 10'.

Comme précédemment, ce circuit 10' comporte une unité de traitement 11 (CPU) susceptible de contrôler son fonctionnement, que ce soit de façon matérielle et/ou logicielle, une ou plusieurs mémoires 12 (MEM) parmi lesquelles au moins une mémoire non volatile reprogrammable, un circuit 13 d'entrée-sortie (I/O) et diverses fonctions matérielles ou logicielles symbolisées par un bloc 15 (FCT) dépendant de l'application.

Selon ce mode de réalisation, le circuit 10' comporte également au moins un circuit 100 (TK) de rétention de charges dont le niveau de charge évolue avec le temps, même lorsque le circuit 10' n'est pas alimenté.

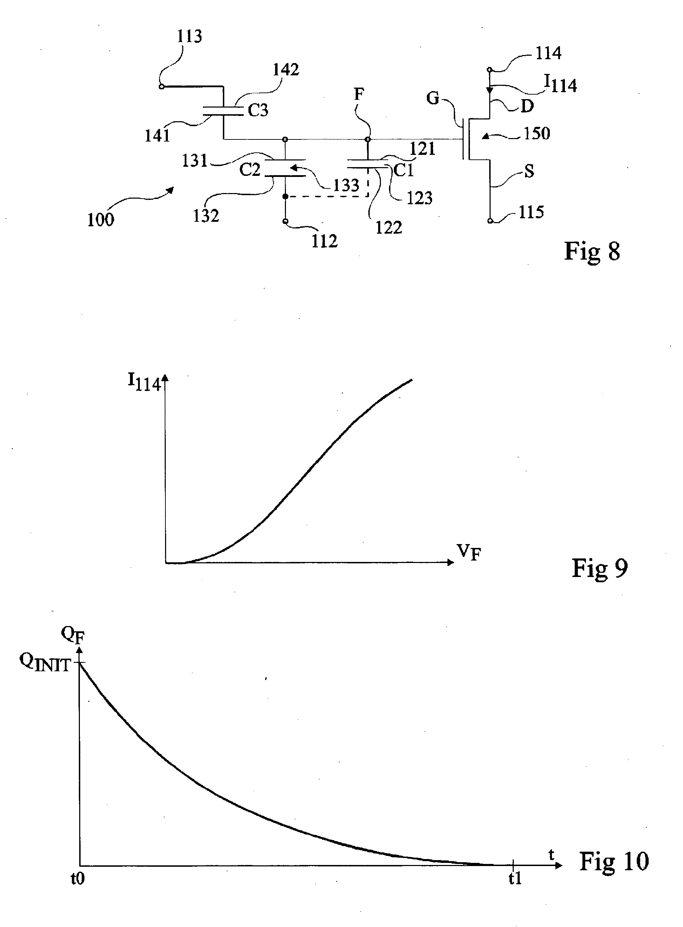

Des exemples détaillés de circuits 100 seront décrits ultérieurement en relation avec les figures 8 et suivantes. Pour l'instant, on se contente de noter qu'un circuit 100 est susceptible d'être programmé ou activé (placé dans un état noté arbitrairement 1) par injection ou extraction de charges dans un élément capacitif qui présente une fuite au travers de son espace diélectrique, de telle sorte que son état actif disparaît (l'élément rebascule vers l'état 0) au bout d'un temps donné, indépendamment de l'alimentation éventuelle du circuit.

Un tel circuit de rétention de charges stocke au moins un état conditionnant l'accès à une ressource protégée du circuit électronique 10'.

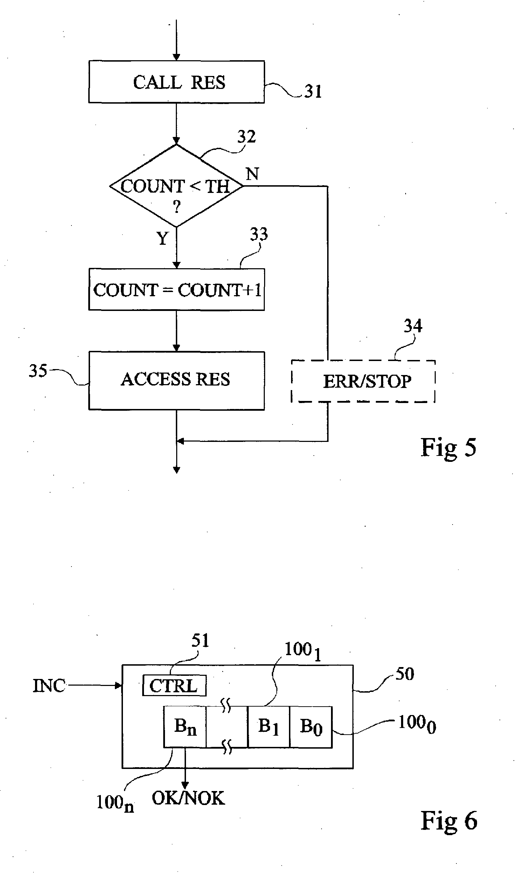

La figure 5 illustre, par un schéma fonctionnel simplifié, un mode de mise en oeuvre d'un mécanisme de contrôle d'accès.

A chaque appel d'une ressource protégée (bloc 31), on commence par vérifier (bloc 32, COUNT < TH ?) l'état d'un compteur COUNT par rapport à un seuil TH. Le compteur COUNT représente le nombre d'accès passés, mémorisés dans le ou les circuits de rétention de charges 100 du circuit 10'.

Si le seuil TH n'est pas atteint par le compteur (sortie Y du bloc 32), le compteur est incrémenté (bloc 33, COUNT = COUNT + 1), puis l'accès à la ressource est autorisé (bloc 35, ACCESS RES).

Si le nombre d'accès excède le seuil (sortie N du bloc 32), l'accès à la ressource est refusé. Par exemple, le mécanisme de contrôle passe directement au traitement postérieur à l'utilisation de la ressource ou met en oeuvre un traitement d'erreur (bloc 34 en pointillés, ERR/STOP), voire un blocage temporaire ou définitif de la ressource ou du circuit.

Grâce à l'utilisation d'un circuit de rétention de charges dont l'état activé disparaît au bout d'un temps donné, le compteur COUNT se réinitialise automatiquement et indépendamment de l'alimentation du circuit électronique 10'. Par conséquent, il est désormais possible de limiter le nombre d'accès à une ressource sur une période donnée.

Bien entendu, au lieu d'incrémenter le compteur COUNT, il est possible d'initialiser le compteur au nombre limite TH, de le décrémenter et de détecter lorsqu'il s'annule.

En prenant le premier aspect, l'utilisation d'une clé un trop grand nombre de fois sur une période donnée, fixée par la capacité de rétention de charges des bits du compteur, conduit à un blocage temporaire ou définitif dès le seuil dépassé.

Un blocage définitif peut être obtenu par les mécanismes habituels faisant suite à une détection d'attaque. Un blocage temporaire peut être obtenu par l'activation d'un circuit 100 supplémentaire dont la durée de rétention est suffisamment longue (par exemple, comprise entre une semaine et trois mois) pour décourager un fraudeur. La clé redevient alors accessible à l'issue de cette période.

Même dans le cas où le dépassement du seuil ne conduit pas à un blocage définitif mais à un blocage temporaire, un fraudeur éventuel se trouve découragé pendant une durée relativement longue par rapport au profit qu'il est susceptible d'en tirer.

Un avantage de ce premier aspect est qu'il s'agit d'une contremesure à des attaques non-invasive ou semi-invasive. En effet, toutes ces attaques requièrent généralement un grand nombre d'essais. A l'extrême, on peut supprimer toutes les autres contremesures (y compris celles introduisant des nombres aléatoires dans les calculs). Elle reste cependant compatible avec ces autres contremesures.

En prenant l'exemple de communications chiffrées décodables au moyen d'un module équipé du circuit, une utilisation simultanée ou trop fréquente de l'algorithme de déchiffrement ou de sa clé va rapidement bloquer l'accès au déchiffrement. Le blocage peut être définitif ou temporaire. Dans ce dernier cas, la durée (par exemple, entre un jour et un mois) est choisie en fonction de la fréquence normale acceptable d'utilisation de la ressource.

La figure 6 représente, de façon très schématique et sous forme de blocs, un exemple de circuit 50 de comptage contenant n circuits électroniques de rétention de charges 100₀, 100₁, ..., 100ₙ stockant chacun un bit B₀, B₁, ..., Bₙ du compteur COUNT. Le circuit 50 est de préférence commandé par un circuit interne 51 (CTRL) provoquant, comme il sera mieux compris par la suite en relation avec les figures 8 et suivantes, l'incrémentation du compteur suite à une détection de dysfonctionnement (entrée INC du bloc 50), ainsi que la lecture de l'état d'un ou plusieurs bits du compteur.

Dans l'exemple illustré par la figure 6, on suppose que le bit Bₙ de rang le plus élevé définit le seuil TH. En effet, un changement d'état de ce bit représente un débordement par rapport au compte 2ⁿ⁻¹ - 1. La lecture de ce seul bit suffit alors pour fournir un signal OK/NOK indicateur du résultat du test 32 (figure 5).

Un avantage d'une telle comparaison par débordement est qu'il rend une même réalisation matérielle du circuit 50 versatile. En effet, le seuil TH peut alors être aisément adapté quel que soit le nombre de bits structurels du compteur 50 en sélectionnant celui des bits du compteur à prendre en compte pour fournir le résultat OK/NOK du test 32.

Différents seuils peuvent être choisis en fonction du type de ressource dont l'accès est demandé.

Selon un autre aspect, le contrôle d'accès sert à limiter un nombre d'utilisations d'une ressource (par exemple, un programme ou un contenu d'un support de stockage) dans un temps donné. Dans ce cas, le compteur est initialisé à un nombre correspondant au nombre d'utilisations autorisées, puis est décrémenté à chaque utilisation. La première des deux limites entre le temps et le nombre bloque l'utilisation de la ressource.

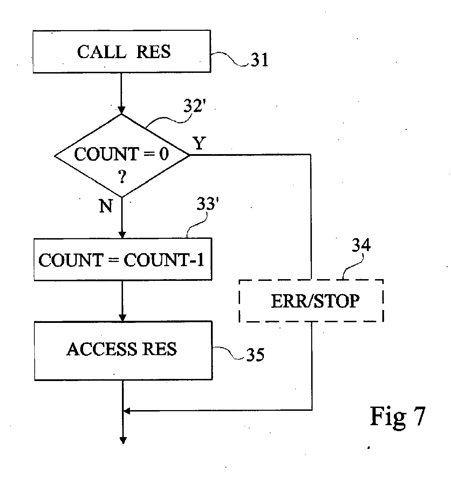

La figure 7 est un schéma fonctionnel simplifié illustrant un mode de mise en oeuvre selon cet autre aspect.

A la mise à disposition du circuit, à la première utilisation, ou lors d'une réinitialisation forcée par une action volontaire d'activation (par exemple, par un terminal de lecture de carte et de location de media numériques), etc., le compteur COUNT est initialisé à une valeur limite. Cette valeur fixe non seulement le nombre d'utilisations (nombre de bits activés du compteur), mais également la durée maximale d'utilisation. En variante, différents compteurs sont réalisés avec des capacités de rétention différentes les unes des autres, ce qui permet de sélectionner la durée d'utilisation autorisée.

Le contrôle d'accès est effectué à chaque appel (bloc 31, CALL RES) d'une ressource (RES) du circuit, que cet appel provienne du circuit lui-même ou d'un dispositif externe.

A chaque appel de la ressource, on commence par comparer l'état du compteur COUNT par rapport à zéro (bloc 32', COUNT = 0 ?).

Dans l'affirmative (sortie Y du bloc 32'), l'accès à la ressource est refusé. Ce refus d'accès subsiste tant que le compteur n'est pas réactivé à la valeur TH.

Sinon (sortie N du bloc 32'), le compteur est décrémenté (bloc 33', COUNT = COUNT - 1), puis l'accès à la ressource est autorisé (bloc 35).

Dans un mode de réalisation simplifié, un seul circuit 100 est utilisé (compteur sur un seul bit ou drapeau). Selon que l'étape 33' est prévue ou non, le nombre d'utilisations est d'au plus un ou n'est pas limité. Le temps maximum d'utilisation reste cependant limité par la capacité de rétention de charges du circuit 100.

L'exemple de la figure 5 trouve de multiples applications ayant besoin d'un décompte temporel automatique, indépendant de l'alimentation du circuit. Par exemple :
- la limitation du nombre d'utilisations d'un ticket de transport électronique (de type transpondeur électromagnétique) dans une durée donnée ;
- la fourniture de licences temporaires d'utilisation de logiciels limitées dans le temps ;
- l'utilisation de clés de chiffrement temporaires ;
- la limitation des droits de lecture de supports multimédia (contenu chiffré si le support est inerte - CD DVD - ou limitation directe si le support est actif donc peut contenir les circuits 100 - mémoire flash, par exemple) ;
- la limitation de validité d'informations relatives à un utilisateur, que ce soit pour forcer un renouvellement de ces informations (renouveler périodiquement les références biométriques d'une personne par exemple) ou pour éviter une diffusion sans contrôle ;
- etc.

Un avantage est de limiter le nombre d'accès à une ressource tout en tenant compte du temps.

Un autre avantage est de permettre une réactivation automatique (figure 5 sans blocage), ou commandable (figure 7) de la ressource protégée.

Dans le cas d'un compteur sur plusieurs bits, la solution proposée est compatible avec les contremesures usuelles (par exemple, un blocage définitif) du circuit électronique en cas d'épuisement des ressources.

Les différents aspects (protection de clé, limitation d'utilisation) et modes de mise en oeuvre sont combinables.

La figure 8 représente un exemple préféré d'un circuit de rétention de charges 100.

Le circuit 100 comporte un premier élément capacitif C1 dont une première électrode 121 est connectée à un noeud flottant F et dont l'espace diélectrique 123 est conçu (par sa permittivité et/ou par son épaisseur) pour présenter des fuites non négligeables dans le temps. Par noeud flottant F, on entend un noeud non directement connecté à une quelconque région diffusée du substrat semiconducteur dans lequel est réalisé préférentiellement le circuit 100 (et le circuit 10') et, plus particulièrement, séparé par un espace diélectrique de toute borne d'application de potentiel. La deuxième électrode 122 de l'élément capacitif C1 est, soit reliée (pointillés en figure 2) à une borne 112 destinée à être reliée à un potentiel de référence (par exemple la masse), soit laissée en l'air.

Un deuxième élément capacitif C2 a une première électrode 131 connectée au noeud F et une deuxième électrode 132 connectée à la borne 112. L'élément capacitif C2 présente une capacité de rétention de charges supérieure à celle de l'élément capacitif C1.

De préférence, un troisième élément capacitif C3 a une première électrode 141 connectée au noeud F et une deuxième électrode 142 reliée à une borne 113 du circuit 100, destinée à être connectée à une source d'alimentation lors d'une initialisation d'une phase de rétention de charges (activation du bit stocké à l'état 1).

Un rôle de l'élément capacitif C2 est de stocker une charge électrique. Un rôle de l'élément de l'élément capacitif C1 est de décharger relativement lentement l'élément de stockage C2 (par rapport à une connexion directe de son électrode 131 à la masse) grâce à une fuite à travers son espace diélectrique. La présence de l'élément capacitif C2 permet de dissocier le niveau de charge présent dans le circuit 100 par rapport à l'élément de décharge (capacité C1). L'épaisseur du diélectrique de l'élément C2 est supérieure à celle de l'élément C1. La capacité de l'élément C2 est supérieure, de préférence dans un rapport d'au moins 10, à celle de l'élément C2.

Un rôle de l'élément capacitif C3 est de permettre une injection de charges dans l'élément capacitif C2 par effet Fowler-Nordheim ou par un phénomène d'injection d'électrons chauds. L'élément C3 permet d'éviter les contraintes (stress) sur l'élément C1 lors de la charge des éléments C2 et C1 en parallèle. L'épaisseur de l'espace diélectrique de l'élément C3 est supérieure à celle de l'élément C1, de façon à éviter d'introduire un chemin de fuite parasite.

Le noeud F est relié à une grille G d'un transistor à borne de commande isolée (par exemple, un transistor MOS 150) dont les bornes de conduction (drain D et source S) sont connectées à des bornes de sortie 114 et 115 pour mesurer la charge résiduelle contenue dans l'élément C2 (en négligeant la capacité de l'élément C1 en parallèle). Par exemple, la borne 115 est reliée à la masse et la borne 114 est reliée à une source de courant (non représentée) permettant une conversion courant-tension du courant de drain I₁₁₄ dans le transistor 150.

L'épaisseur du diélectrique de grille du transistor 150 est supérieure à celle du diélectrique de l'élément C1 de façon à éviter d'introduire une fuite supplémentaire sur le noeud F. De préférence, l'épaisseur de grille du transistor 150 est même supérieure à l'épaisseur du diélectrique de l'élément C3, de façon à éviter d'introduire un chemin parasite de programmation (d'injection ou d'extraction de charges du noeud F).

L'interprétation du niveau stocké peut être effectuée de façon simple au moyen d'un comparateur dont le basculement s'opère tant que la charge du noeud F reste suffisante. Le niveau pour lequel le comparateur bascule définit alors le niveau de changement d'état du bit stocké par l'élément 100. D'autres solutions de lecture peuvent être envisagées, par exemple, une interprétation multiniveaux dans une réalisation où le circuit 100 stocke directement plusieurs bits.

La figure 9 représente un exemple d'allure du courant I₁₁₄ de drain du transistor 150 en fonction de la tension V_{F} au noeud F, référencée par rapport à la borne 115. La tension V_{F} exprime alors la tension grille/source du transistor 150. Elle dépend de la charge résiduelle aux bornes des capacités C1 et C2 en parallèle, donc essentiellement de la charge résiduelle dans la capacité C2. L'évaluation du courant de drain I₁₁₄ peut être effectuée en maintenant les bornes 112 et 115 au même potentiel (par exemple la masse) et en appliquant une tension connue sur la borne 114.

La figure 10 illustre l'évolution de la charge Q_{F} au point F en fonction du temps. A un instant t0 où une tension d'alimentation (de programmation) cesse d'être appliquée sur la borne 113, la charge Q_{F} part d'une valeur initiale Q_{INIT} pour s'annuler à un instant t1 avec une allure de décharge capacitive. L'intervalle de temps entre les instants t0 et t1 dépend non seulement de la capacité de fuite du diélectrique de l'élément C1 mais également de la valeur (donc de la capacité de stockage) de l'élément C2 qui conditionne la valeur Q_{INIT}.

En supposant que les bornes 112 et 115 et la deuxième électrode 122 de l'élément capacitif C1 sont à des potentiels de référence et que la borne 114 est polarisée à un niveau déterminé pour qu'une variation du courant I₁₁₄ ne provienne que d'une variation du potentiel du noeud F, cette variation ne dépend alors que du temps écoulé depuis l'instant t0. Ce résultat est, dans le mode de réalisation représenté, obtenu grâce à la dissociation opérée entre l'élément de fuite temporel (C1) et l'élément représentatif de la charge résiduelle (C2).

La programmation ou activation du circuit 100 (passage à l'état 1 du bit stocké) à travers l'élément capacitif C3 protège l'élément capacitif C1 dont l'épaisseur d'oxyde (diélectrique) est relativement mince et qui risquerait autrement d'être détérioré lors de la programmation. Cela permet notamment de rendre les mesures fiables et reproductibles dans le temps.

Le cas échéant, plusieurs éléments capacitifs C3 sont connectés en parallèle entre la borne 113 et le noeud F de façon à accélérer le temps de programmation.

De même, la durée de rétention peut être adaptée non seulement en réglant les épaisseurs et/ou les permittivités des diélectriques des éléments C1 et C2 mais également en prévoyant plusieurs éléments C1 et/ou C2 en parallèle.

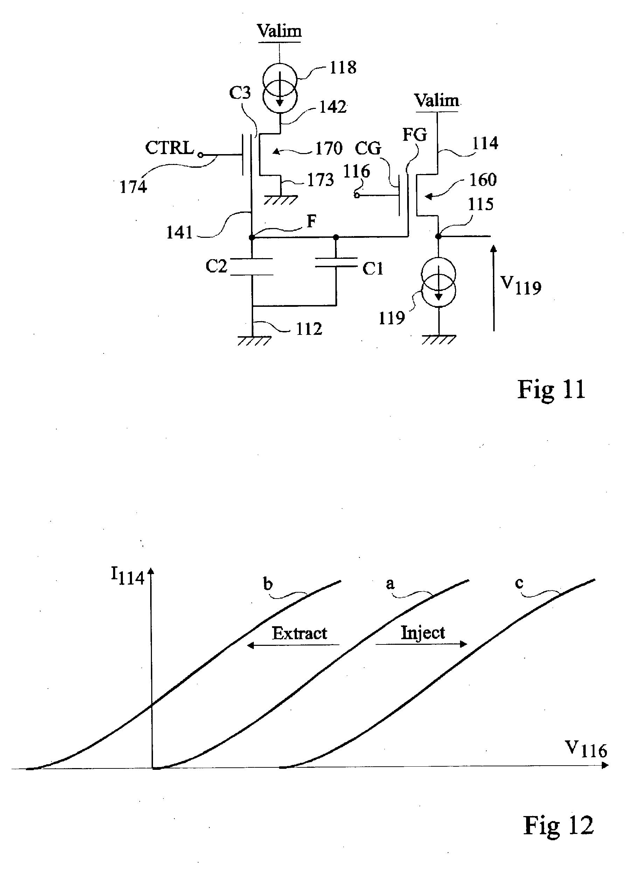

La figure 11 représente le schéma électrique d'un autre mode de réalisation d'un circuit de rétention de charges 100'.

Par rapport au mode de réalisation de la figure 8, le transistor 150 est remplacé par un transistor 160 à grille flottante FG reliée au noeud F. La grille de commande CG du transistor 160 est reliée à une borne 116 de commande en lecture de la charge résiduelle dans le circuit 100' (donc de l'état du bit stocké). L'épaisseur du diélectrique, entre la grille flottante FG et le canal (zone active) du transistor 160, est supérieure à celle de l'élément C1 et préférentiellement supérieure à celle de l'élément C3.

Une autre différence est que l'élément C3 d'injection ou d'extraction de charges est un transistor MOS 170 à grille flottante. La grille flottante 141 du transistor 170 est reliée au noeud F.

Dans l'exemple de la figure 11, le circuit a été représenté dans une partie de son environnement. Le drain 142 du transistor 170 est relié à une source de courant 118 recevant une tension d'alimentation Valim et sa source 173 est connectée à la masse. Sa grille de commande 174 reçoit un signal de commande CTRL destinée à rendre le transistor 170 passant lors d'un besoin d'injection de charges. Le drain (borne 114) du transistor 160 reçoit la tension d'alimentation Valim et sa source est reliée à la masse par une source de courant 119 (variante inversée par rapport au mode de réalisation décrit en relation avec la figure 8). La tension V₁₁₉ aux bornes de la source de courant 119 est représentative de la tension au point F et est utilisée pour faire basculer la sortie d'un comparateur (non représenté).

La figure 12 illustre, par un graphe du courant I₁₁₄ en fonction de la tension V₁₁₆ appliquée sur la grille de commande, le fonctionnement du circuit de la figure 11. Pour les besoins de l'explication, on suppose que la tension aux bornes 114 de drain et 115 de source du transistor 160 est maintenue constante par le circuit de lecture extérieur. La chute de tension entre la grille flottante et la borne 115 dépend alors de la charge électrique présente au noeud F, de la capacité totale entre les noeuds F et 112 (essentiellement les capacités C1 et C2), et de la tension appliquée sur la grille de commande 116 du transistor 160. En figure 12, trois courbes a, b et c ont été illustrées. La courbe a représente le cas où le noeud F est entièrement déchargé. La courbe b représente le cas d'une charge positive présente sur le noeud F (extraction d'électrons). Le seuil du transistor 160 est alors abaissé. La courbe c représente le cas d'une charge négative au noeud F (injection d'électrons) qui engendre un seuil supérieur pour le transistor MOS 160.

Selon les applications, on pourra injecter ou extraire des charges du noeud F de façon à modifier la caractéristique du transistor 160 depuis la courbe a vers l'une des courbes b et c. Une fois isolée de la tension de programmation, la fuite de la capacité C1 permet de retrouver avec le temps la courbe a. Une mesure du courant I₁₁₄ (donc de la tension V₁₁₉) à tension V₁₁₆ nulle permet de détecter une expiration du temps (réinitialisation du bit à zéro) quand le courant I₁₁₄ s'annule.

Par la suite, on suppose une extraction d'électrons (application sur la borne 113 d'une tension d'activation ou de programmation positive par rapport à la borne 112) par effet Fowler-Nordheim. Le fonctionnement qui va être décrit se transpose toutefois sans difficulté à une injection d'électrons au noeud F, par exemple, par un phénomène dit de porteurs chauds en appliquant des tensions adaptées entre les bornes 142, 173 et 174.

Des tensions différentes peuvent être utilisées en programmation et en lecture à condition de disposer d'une référence exploitable entre la charge résiduelle et l'interprétation de l'état du bit stocké.

Selon un exemple particulier de réalisation, un circuit de rétention de charges est réalisé avec les valeurs suivantes :
Capacité C1 : 2 fF, épaisseur de diélectrique : 40 Å ;
Capacité C2 : 20 fF, épaisseur de diélectrique : 160 Â ;
Capacité C3 : 1 fF, épaisseur de diélectrique : 80 Â.

Un tel circuit peut être initialisé par application d'une tension de l'ordre de 12 volts et se trouve déchargé au bout d'environ une semaine. Il ne s'agit bien entendu que d'un exemple, les épaisseurs de diélectrique et l'éventuelle association en parallèle de plusieurs éléments C1 ou C2 conditionnant la durée de rétention des charges.

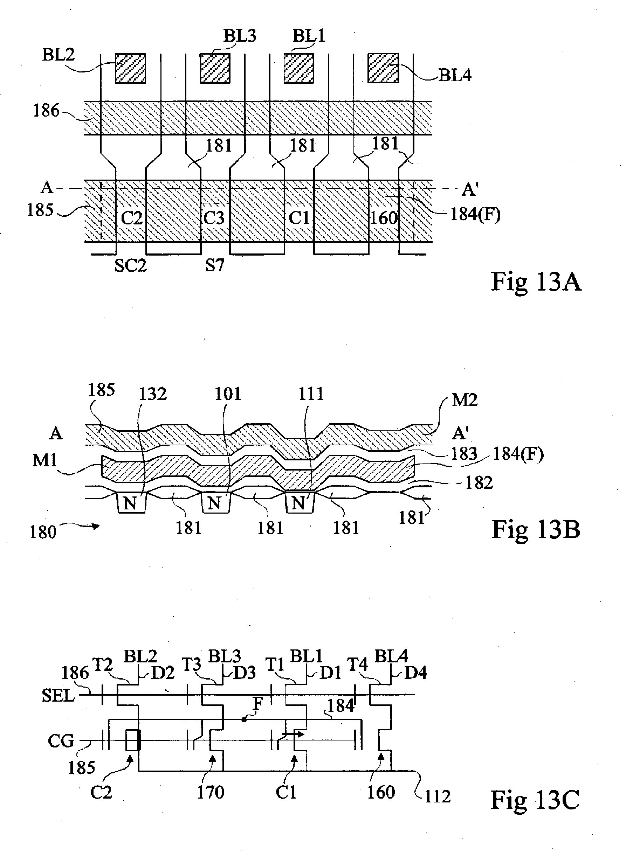

Les figures 13A, 13B, 13C, 14A, 14B, 14C, 15A, 15B, 15C, 16A, 16B, 16C, 17A, 17B et 17C représentent un exemple de circuit 100' selon le mode de réalisation de la figure 11 dans une structure intégrée, dérivée d'une architecture de mémoire EEPROM.

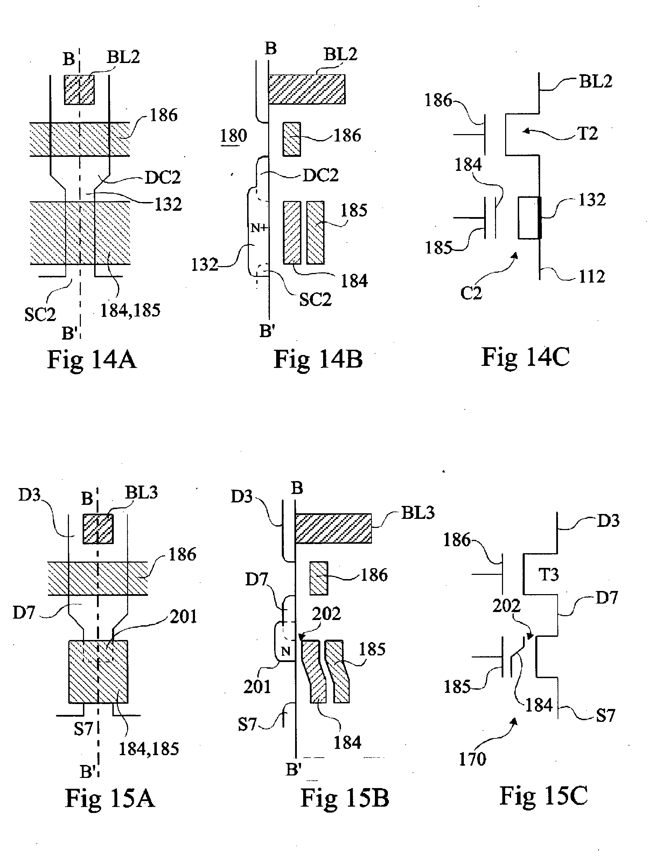

Les figures 13A, 14A, 15A, 16A et 17A sont des vues de dessus schématiques, respectivement du circuit électronique de rétention de charges et de ses éléments C2, 170, C1 et 160. La figure 13B est une coupe selon la ligne AA' de la figure 13A. Les figures 14B, 15B, 16B et 17B sont respectivement des vues en coupe selon les lignes BB' des figures 14A, 15A, 16A et 17A. Les figures 13C, 14C, 15C, 16C et 17C représentent les schémas électriques équivalents respectifs du circuit électronique de rétention de charges et de ses éléments C2, 170, C1 et 160.

On suppose une réalisation de transistors à canal N dans un substrat 180 (figure 13B) de silicium de type P. L'inverse est bien entendu possible.

Chaque élément ou cellule C2, 170, C1 ou 160 est obtenu à partir d'un transistor à grille flottante connecté en série avec un transistor de sélection T2, T3, T1 ou T4 à simple grille pour sélectionner, par exemple dans un réseau matriciel de cellules mémoire EEPROM, le circuit électronique de rétention de charges.

Les grilles flottantes des différents transistors constitutifs des éléments C2, 170, C1 et 160 sont interconnectées (ligne conductrice 184) pour former le noeud flottant F. Leurs grilles de commande sont reliées ensemble à une ligne conductrice 185 d'application du signal CG de commande en lecture. Leurs sources respectives SC2, S7, SC1 et S6 sont interconnectées à la borne 112 (la masse) et leurs drains respectifs DC2, D7, DC1 et D6 sont reliés aux sources respectives des transistors de sélection T2, T3, T1 et T4.

Les grilles des transistors T1 à T4 sont reliées ensemble à une ligne conductrice 186 d'application d'un signal SEL de sélection du circuit. Leurs drains respectifs D1 à D4 sont connectés à des lignes de bit BL1 à BL4 commandables individuellement. L'ordre des lignes de bit dans la figure 13C a été illustré de façon arbitraire BL2, BL3, BL1 et BL4 mais l'ordre des différents éléments C2, 170, C1 et 160 dans la direction horizontale des rangées (dans l'orientation des figures) est indifférent.

Dans cet exemple de réalisation, on suppose des régions de source et drain de type N (figure 13B) séparées les unes des autres dans la direction des lignes par des zones isolantes 181. Les grilles flottantes sont réalisées dans un premier niveau conducteur M1 séparé des régions actives par un niveau isolant 182 et les grilles de commande sont réalisées dans un deuxième niveau conducteur M2 séparé du premier par un troisième niveau isolant 183. Les grilles des transistors de sélection sont réalisées, par exemple, dans le niveau M2.

Une différence par rapport à un réseau de cellules mémoire EEPROM usuel est que les grilles flottantes sont interconnectées par groupe de quatre transistors pour réaliser le noeud flottant F. Une autre différence est que les transistors à grille flottante réalisant les différents éléments du circuit sont différents les uns des autres dans l'épaisseur de leur fenêtre tunnel et/ou dans leur connexion de drain et source.

Les figures 14A à 14C illustrent la réalisation du condensateur C2 de stockage. Les drain DC2 et source SC2 du transistor à grille flottante correspondant sont court-circuités (par extension de l'implantation de type N+ dans toute la zone active, figure 14B) pour former l'électrode 132 du condensateur. Par ailleurs, la fenêtre tunnel est éliminée par rapport à une cellule EEPROM standard.

Les figures 15A à 15C illustrent la réalisation du transistor 170 formant l'élément capacitif C3 de programmation. Il s'agit d'une cellule EEPROM standard dont l'extension 201 de la zone dopée N sous la fenêtre tunnel 202 (figure 15B) permet d'obtenir un plateau dans la zone d'injection de charges. A la manière d'une cellule EEPROM standard, la zone de drain D7 est reliée à la source du transistor de sélection T3. La zone de source S7 est reliée à la borne 112.

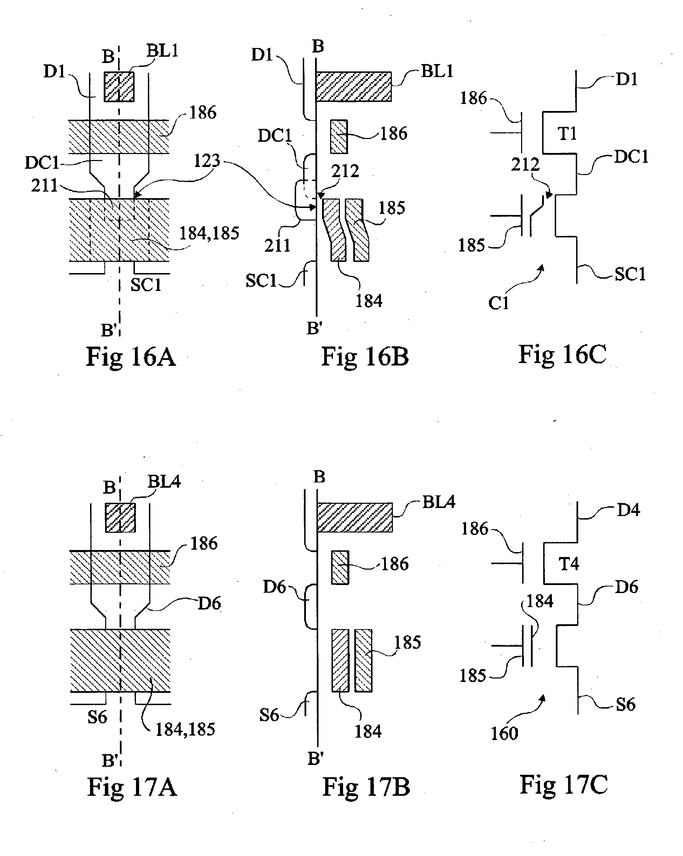

Les figures 16A à 16C illustrent la réalisation de l'élément capacitif C1 constituant l'élément de fuite du circuit de rétention de charges. Par rapport à une cellule EEPROM standard, une différence consiste à amincir (zone 212, figure 16B) la fenêtre diélectrique servant à l'effet tunnel pour augmenter les fuites. Par exemple, l'épaisseur du diélectrique 212 est choisie pour être d'environ la moitié (par exemple, entre 30 et 40 angströms) de celle (par exemple, entre 70 et 80 angströms) d'une fenêtre tunnel (202, figure 15B) d'une cellule non modifiée.

Les figures 17A à 17C illustrent la réalisation du transistor de lecture 160 dans lequel la fenêtre tunnel a été supprimée de même que, de préférence, la zone implantée habituelle (201, figure 15B) d'une cellule EEPROM. La zone active limitée par les source S6 et drain D6 est donc similaire à celle d'un transistor MOS normal.

Les représentations des figures 13A à 17C sont schématiques et pourront être adaptées à la technologie utilisée. En particulier, les grilles ont été représentées alignées avec les limites des zones de drain et source mais un léger recouvrement est souvent présent.

Un avantage de la réalisation au moyen d'une technologie de cellules EEPROM est que le circuit de rétention de charges peut être programmé et réinitialisé en appliquant les mêmes niveaux de tension et les mêmes fenêtres temporelles que ceux utilisés pour effacer ou écrire dans des cellules mémoire EEPROM.

Un autre avantage est que cela préserve une stabilité dans le temps en évitant les dégradations de l'oxyde mince de l'élément de fuite (C1) lors des opérations d'écritures successives.

Les connexions respectives des lignes de bit BL1 à BL4 dépendent des phases de fonctionnement du circuit et notamment de la phase de programmation (activation) ou de lecture.

Le tableau I ci-dessous illustre un mode de mise en oeuvre d'une activation (SET) et d'une lecture (READ) d'un circuit électronique de rétention de charges tel qu'illustré par les figures 13A à 17C.

**Tableau I**

| | SEL | CG | BL2 | BL3 | BL1 | BL4 | 112 |
|---|---|---|---|---|---|---|---|
| SET | VPP₁ | 0 | HZ | VPP₂ | HZ | HZ | HZ |
| READ | V_{SEL} | V_{READ} | HZ | HZ | HZ | V₁₁₄ | 0 |

Dans une phase d'activation SET (passage du bit stocké à l'état 1), le signal de sélection SEL est porté à un premier potentiel haut VPP₁ par rapport à la masse pour rendre passants les différents transistors T1 à T4 tandis que le signal CG appliqué sur les grilles de commande des transistors à grille flottante reste au niveau bas 0 de façon à ne pas rendre passant le transistor 160. Les lignes de bit BL1, BL2 et BL4 restent en l'air (état de haute impédance HZ) tandis que la ligne BL3 se voit appliquée un potentiel positif V_{PP2} permettant la charge du noeud flottant F. La ligne 112, commune aux sources des transistors à grille flottante, est préférentiellement laissée en l'air HZ.

Pour la lecture READ, les différents transistors de sélection sont activés par le signal SEL à un niveau V_{SEL} et une tension V_{READ} de lecture est appliquée sur les grilles de commande des différents transistors à grille flottante. Les lignes BL1, BL2 et BL3 sont dans un état de haute impédance HZ alors que la ligne BL4 reçoit un potentiel V₁₁₄ permettant d'alimenter la source de courant de lecture. La ligne 112 est ici connectée à la masse.

Les relations entre les différents niveaux VPP₁, VPP₂, V_{SEL}, V_{READ} et V₁₁₄ sont, de préférence, les suivantes :
VPP₁ supérieur à VPP₂ ;
V_{SEL} supérieur à V_{READ} ;
V_{READ} du même ordre de grandeur que V₁₁₄.

Selon un exemple particulier de réalisation :
VPP₁ = 14 Volts ;
VPP₂ = 12 volts ;
V_{SEL} = 4 volts ;
V_{READ} = 2 volts ; et
V₁₁₄ = 1 volt.

Ce qui a été décrit ci-dessus en relation avec une cellule EEPROM par élément du circuit de rétention de charges peut bien entendu être remplacé par une structure dans laquelle des sous-ensembles de plusieurs cellules identiques en parallèle sont utilisés pour les différents éléments respectifs. En particulier :
plusieurs éléments C2 peuvent être utilisés en parallèle pour accroître la capacité du noeud F de façon à augmenter le temps de décharge du circuit électronique ;
plusieurs éléments 170 peuvent être utilisés en parallèle pour accroître la vitesse d'injection ou d'extraction d'électrons au noeud F lors d'une programmation ;
plusieurs éléments de fuite C1 peuvent être utilisés en parallèle pour réduire le temps de décharge du système ; et/ou
plusieurs éléments de lecture 160 peuvent être introduits en parallèle pour fournir un courant supérieur lors de l'évaluation du circuit.

Un circuit électronique de rétention de charges peut être introduit dans n'importe quelle position d'un réseau de cellules mémoire EEPROM standard, ce qui permet de rendre plus difficile sa localisation par un éventuel utilisateur mal intentionné.

Le cas échéant, les transistors de sélection des cellules formant le circuit de rétention de charges sont partagés avec des cellules EEPROM normales sur les mêmes lignes de bits, pourvu de prévoir des moyens d'adressage et de commutation adaptés.

Bien entendu, la présente invention est susceptible de diverses variantes et modifications qui apparaîtront à l'homme de l'art. En particulier, le circuit de rétention de charges pourra être constitué par n'importe quel circuit susceptible de présenter, de façon reproductible, une perte de charge au cours du temps indépendamment de l'alimentation du circuit. Par exemple, on pourra avoir recours à un circuit tel que décrit dans la demande internationale WO-A-03/083769.

De plus, la mise en oeuvre pratique du circuit à partir des indications fonctionnelles données ci-dessus et des besoins de l'application est à la portée de l'homme du métier. Les compteurs pourront être de toute nature et la fonction de comptage peut être de n'importe quel incrément ou décrément. Par exemple (notamment dans des modes de réalisation, par exemple figure 8 et suivantes, où les cellules de comptage ne peuvent pas être réinitialisées autrement que de façon temporelle), on pourra utiliser deux compteurs incrémentiels de taille finie dont la différence fournit la valeur à considérer.

En outre, notamment comme elle ne requiert pas d'alimentation permanente, l'invention peut être mise en oeuvre dans des dispositifs sans contact (de type transpondeur électromagnétique) qui tirent leur alimentation d'un champ électromagnétique dans lequel ils se trouvent (généré par un terminal).

Enfin, tout ce qui a été décrit en relation avec un incrément d'un compteur se transpose sans difficulté à un décrément d'un compteur à chaque détection.

## Revendications

1. Procédé de contrôle d'accès à au moins une ressource d'un circuit électronique (10'), dans lequel un test (32, 32') de la valeur d'un compteur (COUNT) sur au moins un bit conditionne l'accès à la ressource, le compteur étant réinitialisé automatiquement au bout d'une durée indépendante du fait que le circuit soit alimenté ou non et étant réalisé sous la forme d'au moins un circuit de rétention de charges (100), le ou chaque circuit de rétention de charges comportant :
au moins un premier élément capacitif (C1) présentant une fuite au travers de son espace diélectrique dont une première électrode (121) est connectée à un noeud flottant (F) séparé par un espace diélectrique de toute borne d'application de potentiel ;
au moins un deuxième élément capacitif (C2) dont une première électrode (131) est connectée audit noeud flottant (F), le deuxième élément capacitif ayant une capacité supérieure au premier ; et
au moins un premier transistor (150, 160) à borne de commande isolée et connectée audit noeud flottant, et dans lequel un passage d'un bit dudit compteur (COUNT) dans un état actif est provoqué par une injection ou extraction de charges dans ledit premier élément capacitif (C1), ledit premier élément capacitif déchargeant le deuxième élément capacitif relativement lentement par rapport à une connexion directe à la masse.

2. Procédé selon la revendication 1 dans lequel le compteur (COUNT) est incrémenté (33) ou décrémenté (33) à chaque accès à la ressource.

3. Procédé selon l'une quelconque des revendications 1 et 2, dans lequel ledit compteur (COUNT) est sur plusieurs bits, le résultat dudit test (32, 32') étant fourni directement par l'état d'un des bits.

4. Procédé selon l'une quelconque des revendications 1 à 3, dans lequel l'accès à ladite ressource est bloqué en cas de détection (32, 32') d'un nombre d'accès passés supérieur à un seuil, le blocage étant définitif, ou temporaire d'une durée indépendante du fait que le circuit soit alimenté ou non.

5. Procédé selon la revendication 4, dans lequel la durée du blocage est comprise entre une journée et trois mois.

6. Procédé selon l'une quelconque des revendications 1 à 5, dans lequel le compteur est initialisé lors d'un premier accès à la ressource ou sur commande.

7. Procédé selon l'une quelconque des revendications 1 à 6, appliqué à la limitation de la fréquence d'utilisation d'une quantité secrète du circuit.

8. Procédé selon la revendication 7, appliqué à la protection de la quantité secrète.

9. Procédé selon l'une quelconque des revendications 1 à 7, appliqué au contrôle d'accès d'une ressource du circuit permettant d'exploiter un contenu d'un autre support.

10. Procédé selon l'une quelconque des revendications 1 à 7, appliquée à la fourniture d'autorisations temporaires d'utilisation d'un programme ou de données.

11. Circuit électronique (10') comportant des moyens pour la mise en oeuvre du procédé selon l'une quelconque des revendications 1 à 10.

12. Circuit selon la revendication 11, dans lequel au moins un troisième élément capacitif (C3, 170) a une première électrode (141) reliée audit noeud flottant (F) et une deuxième électrode (142) connectable à une source de tension.

13. Circuit selon la revendication 12, implanté dans un réseau de cellules mémoire de type EEPROM comportant chacune un transistor de sélection en série avec un transistor à grille flottante, dans lequel, sur une même rangée de cellules mémoire dont les grilles flottantes respectives des transistors des cellules sont interconnectées :
le premier élément capacitif comporte un premier sous-ensemble d'au moins une première cellule (C1) dont l'épaisseur du diélectrique (212) de la fenêtre tunnel du transistor à grille flottante est inférieure à celle des autres cellules ;
le deuxième élément capacitif comporte un deuxième sous-ensemble d'au moins une deuxième cellule (C2) dont les drain et source du transistor à grille flottante sont interconnectés ;
le troisième élément capacitif comporte un troisième sous-ensemble d'au moins une troisième cellule (170) ; et
le premier transistor comporte un quatrième sous-ensemble d'au moins une quatrième cellule (160) dont la fenêtre tunnel est supprimée.

## Patentansprüche

1. Ein Verfahren zum Steuern des Zugriffs auf wenigstens eine Resource von einem elektronischen Schaltkreis (10'), wobei ein Test (32, 32') eines Wertes eines Zählers (COUNT) über wenigstens ein Bit den Zugriff auf die Resource festlegt, wobei der Zähler nach einer Zeitspanne, die unabhängig davon ist ob der Schaltkreis eingeschaltet ist oder nicht, automatisch zurückgesetzt wird, und wobei der Zähler durch wenigstens einen Ladungsaufrechterhaltungsschaltkreis (100) implementiert wird, wobei der Ladungsaufrechterhaltungsschaltkreis Folgendes aufweist:
wenigstens ein erstes kapazitives Element (C1), das eine Leckage durch sein Dielektrikum aufweist, wobei das erste kapazitive Element eine erste Elektrode (121) aufweist, die mit einem massefreien Knoten (F) verbunden ist, der durch ein Dielektrikum von jedem Spannungszuführungsanschluss getrennt ist;
wenigstens ein zweites kapazitives Element (C2), das eine erste Elektrode (131) aufweist, die mit dem massefreien Knoten (F) verbunden ist, wobei das zweite kapazitive Element eine größere Kapazität aufweist als das erste kapazitive Element; und
wenigstens eine ersten Transistor (150, 160) mit einem isolierten Steueranschluss, der mit dem massefreien Knoten verbunden ist, wobei ein Schalten eines Bits des Zählers (COUNT) in einen aktiven Zustand verursacht wird durch ein Einbringen in oder ein Extrahieren von Ladungen von dem ersten kapazitiven Element (C1), wobei das erste kapazitive Element relativ langsam das zweite kapazitive Element bezüglich einer direkten Verbindung mit Masse entlädt.

2. Das Verfahren nach Anspruch 1, wobei der Zähler (COUNT) bei jedem Zugriff auf die Resource inkrementiert (33) oder dekrementiert (33) wird.

3. Das Verfahren nach Anspruch 1 oder 2, wobei der Zähler (COUNT) über mehrere Bits geht und wobei das Ergebnis des Tests (32, 32') direkt durch den Zustand von einem der Bits bereitgestellt wird.

4. Das Verfahren nach einem der Ansprüche 1 bis 3, wobei der Zugriff auf die Resource im Falle einer Detektion (32, 32') einer Anzahl von vergangenen Zugriffen, die größer ist als ein Schwellwert, blockiert wird, wobei das Blockieren endgültig oder temporär ist, für eine Dauer, die unabhängig davon ist ob der Schaltkreis eingeschaltet ist oder nicht.

5. Das Verfahren nach Anspruch 4, wobei die Blockierdauer zwischen einem Tag und drei Monaten liegt.

6. Das Verfahren nach einem der Ansprüche 1 bis 5, wobei der Zähler beim ersten Zugriff auf die Resource oder kontrolliert gesetzt wird.

7. Das Verfahren nach einem der Ansprüche 1 bis 6, angewendet um die Häufigkeit der Verwendung einer geheimen Größe des Schaltkreises zu begrenzen.

8. Das Verfahren nach Anspruch 7, angewendet um die geheime Größe zu schützen.

9. Das Verfahren nach einem der Ansprüche 1 bis 7, angewendet um den Zugriff auf eine Resource des Schaltkreises zu steuern, die das Verwenden des Inhalts einer weiteren Unterstützung erlaubt.

10. Das Verfahren nach einem der Ansprüche 1 bis 7, angewendet auf das Bereitstellen von temporären Berechtigungen zur Verwendung eines Programms oder von Daten.

11. Ein elektronischer Schaltkreis (10'), wobei der elektronische Schaltkreis Mittel zum Implementieren des Verfahrens nach einem der Ansprüche 1 bis 10 aufweist.

12. Der Schaltkreis nach Anspruch 11, wobei wenigstens ein drittes kapazitives Element (C3, 170) eine erste Elektrode (141) aufweist, die mit dem massefreien Knoten (F) verbunden ist und eine zweite Elektrode (142) aufweist, die geeignet ist an eine Spannungsquelle angeschlossen zu werden.

13. Der Schaltkreis nach Anspruch 12, wobei der Schaltkreis in einem Array von EEPROM-artigen Speicherzellen implementiert ist, wobei jede der Zellen einen Auswahltransistor aufweist, der in Serie geschaltet ist mit einem massefreien-gate Transistor, wobei auf einer gleichen Reihe von Speicherzellen auf denen entsprechende massefreie Gates der Zellentransistoren verbunden sind, vorgesehen ist:
das erste kapazitive Element einen ersten Untersatz von wenigstens einer ersten Zelle (C1) aufweist, wobei die Dicke des Dielektrikums (212) des Tunnelfensters des massefreien-gate Transistors kleiner ist als das der anderen Zellen;
das zweite kapazitive Element einen zweiten Untersatz von wenigstens einer zweiten Zelle (C2) aufweist, wobei die Drain und die Source des massefreien-gate Transistors verbunden sind;
das dritte kapazitive Element einen dritten Untersatz von wenigstens einer dritten Zelle (170) aufweist; und
der erste Transistor einen vierten Untersatz von wenigstens einer vierten Zelle (160) aufweist, bei dem das Tunnelfenster unterdrückt ist.

## Claims

1. A method for controlling the access to at least one resource of an electronic circuit (10'), wherein a test (32, 32') of the value of a counter (COUNT) over at least one bit conditions the access to the resource, the counter being automatically reset after a time period independent from whether the circuit is powered or not and being implemented by at least one charge retention circuit (100), the or each charge retention circuit comprising:
at least one first capacitive element (C1) exhibiting a leakage through its dielectric space having a first electrode (121) connected to a floating node (F) separated by a dielectric space from any voltage application terminal;
at least one second capacitive element (C2) having a first electrode (131) connected to said floating node (F), the second capacitive element having a greater capacitance than the first one; and
at least one first transistor (150, 160) with an insulated control gate connected to said floating node and wherein a switching of a bit if said counter (COUNT) to an active state is caused by an injection or extraction of charges into or from said first capacitive element (C1), said first capacitive element discharging relatively slowly the second capacitive element with respect to a direct connection to ground.

2. The method of claim 1, wherein said counter (COUNT) is incremented (33) or decremented (33) on each access to the resource.

3. The method of claim 1 or 2, wherein said counter (COUNT) is over several bits, the result of said test (32, 32') being provided directly by the state of one of the bits.

4. The method of any of claims 1 to 3, wherein the access to said resource is blocked in case of a detection (32, 32') of a number of past accesses greater than a threshold, the blocking being definitive or temporary, of a duration independent from whether the circuit is powered or not.

5. The method of claim 4, wherein the blocking duration ranges between one day and three months.

6. The method of any of claims 1 to 5, wherein the counter is set at the first access to the resource or under control.

7. The method of any of claims 1 to 6, applied to limiting the frequency of use of a secret quantity of the circuit.

8. The method of claim 7, applied to the protection of the secret quantity.

9. The method of any of claims 1 to 7, applied to the control of the access to a resource of the circuit enabling utilizing the content of another support.

10. The method of any of claims 1 to 7, applied to the providing of temporary authorizations of use of a program or of data.

11. An electronic circuit (10') comprising means for implementing the method of any of claims 1 to 10.

12. The circuit of claim 11, wherein at least one third capacitive element (C3, 170) has a first electrode (141) connected to said floating node (F) and a second electrode (142) connectable to a voltage source.

13. The circuit of claim 12, implanted in an array of EEPROM-type memory cells each comprising a selection transistor is series with a floating-gate transistor, wherein on a same row of memory cells where the respective floating gates of the cell transistors are interconnected:
the first capacitive element comprises a first subset of at least one first cell (C1) where the thickness of the dielectric (212) of the tunnel window of the floating gate transistor is smaller than that of the other cells;
the second capacitive element comprises a second subset of at least one second cell (C2) where the drain and the source of the floating-gate transistor are interconnected;
the third capacitive element comprises a third subset of at least one third cell (170); and
the first transistor comprises a fourth subset of at least one fourth cell (160) having its tunnel window suppressed.
